# EUROPEAN PATENT APPLICATION

(11) **EP 3 382 618 A1**
(43) Date of publication of application: **03.10.2018**
(21) Application number: 18164216.6
(22) Date of filing: 27.03.2018
(51) Int. Cl.: G06Q 10/06, G06Q 10/10

(54) **METHOD OF EVALUATION PROCESSING, INFORMATION PROCESSING APPARATUS AND PROGRAM**

(30) Priority: 31.03.2017 JP 2017071871
(71) Applicant: FUJITSU LIMITED, Kanagawa 211-8588 (JP)
(72) Inventor: FUJINO, Yu, Kanagawa, 211-8588 (JP); HORIBE, Takayuki, Kanagawa, 211-8588 (JP); MATSUMOTO, Yasuhide, Kanagawa, 211-8588 (JP)
(74) Representative: Hoffmann Eitle

(57) **Abstract**

A method of evaluation processing executed by a computer, the method includes receiving first information indicating a first condition from a first terminal device, setting the first condition indicated by the received first information to be a reference available state in which reference by a second terminal device is available, receiving second information indicating an evaluation relative to the first condition from the second terminal device, and transmitting, to the first terminal device, third information indicating a change of the first condition based on the received second information.

## Description

### TECHNICAL FIELD

The embodiment discussed herein is related to a method of evaluation processing, an information processing apparatus and a program.

### BACKGROUND ART

In recent years, sharing services which serve an intermediary when various resources, such as cars, vacant rooms, cloths, manpower, ability, and funds, are shared by a plurality of persons or when such resources are lent and borrowed among individuals have been widely used. In such a sharing service, matching between a case offered by a provider and an applicant who applies the case is performed.

As a technique for assisting the matching, a method employed in an electronic auction between a prospective buyer and a plurality of prospective sellers has been proposed, for example. This method includes a step of inputting a request of the buyer who demands an offer in a computer and a step of transmitting the request of an offer to at least two sellers. This method further includes a step of receiving an offer including conditions of sale based on the request of an offer from at least two sellers. This method further includes a step of automatically generating information on rating of offers of the sellers based on a plurality of predetermined criteria and a step of transmitting information on at least a number of the offers of the sellers to at least one of the other sellers. This method further includes a step of receiving a controlled offer from at least one of the sellers in a specified auction period and a step of transmitting information on at least a number of the offers of the sellers and at least part of the rating information to the buyer.

Furthermore, an employment information providing system which assists matching between job seekers and employer companies has been proposed. This system causes the job seekers to input ability information, such as qualifications and special skills, carrier information, such as educational records and employment history, desire information, such as a desired business field, a desired profession, a desired company scale, and a desired work location, and information on answers to aptitude diagnosis by a question form. The related arts are disclosed in Japanese National Publication of International Patent Application No. 2003-504751 and Japanese Laid-open Patent Publication No. 2001-357124.

### SUMMARY

### [TECHNICAL PROBLEM]

As described above, sharing services have been widely used to serve an intermediary when various resources, such as cars, vacant rooms, cloths, manpower, ability, and funds, are shared by a plurality of persons or when such resources are lent and borrowed among individuals. However, providers and applicants may not match each other for a long period of time, and therefore, offering cases may remain in the sharing service. Since the sharing service has a concept of sharing of resources, conditions of offering cases are preferably adjusted between the applicants and the providers to enhance the matching.

### [SOLUTION TO PROBLEM]

According to an aspect of the invention, a method of evaluation processing executed by a computer, the method includes receiving first information indicating a first condition from a first terminal device, setting the first condition indicated by the received first information to be a reference available state in which reference by a second terminal device is available, receiving second information indicating an evaluation relative to the first condition from the second terminal device, and transmitting, to the first terminal device, third information indicating a change of the first condition based on the received second information.

### [ADVANTAGEOUS EFFECTS OF INVENTION]

According to an aspect, matching in a sharing service may be enhanced.

### BRIEF DESCRIPTION OF DRAWINGS

FIG. 1 is a block diagram schematically illustrating a configuration of a sharing service including an evaluation processing apparatus according to an embodiment;
FIG. 2 is a functional block diagram illustrating the evaluation processing apparatus;
FIG. 3 is a diagram illustrating an example of a case database (DB);
FIG. 4 is a diagram illustrating an example of a case screen;
FIG. 5 is a diagram illustrating an example of a questionnaire DB;
FIG. 6 is a diagram illustrating an example of a suggestion screen;
FIG. 7 is a diagram illustrating an example of a past-record DB;
FIG. 8 is a block diagram schematically illustrating a configuration of a computer functioning as a sharing server including the evaluation processing apparatus according to the embodiment;
FIG. 9 is a flowchart of an example of an evaluation process according to the embodiment;
FIG. 10 is a flowchart of an example of a suggestion process;
FIG. 11 is a flowchart of an example of a matching process;
FIG. 12 is a block diagram illustrating an example of a configuration of the evaluation processing apparatus and sharing servers; and
FIG. 13 is a block diagram illustrating another example of the configuration of the evaluation processing apparatus and sharing servers.

### DESCRIPTION OF EMBODIMENT

Hereinafter, an exemplary embodiment of the disclosed technique will be described in detail with reference to the accompanying drawings.

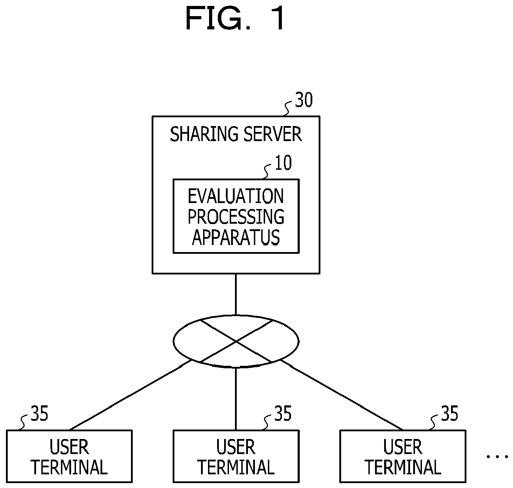

As illustrated in FIG. 1, a sharing server 30 including an evaluation processing apparatus 10 according to the embodiment is connected to a plurality of user terminals 35 through a network, such as the Internet. The number of sharing servers 30 and the number of user terminals 35 are not limited to the examples of FIG. 1.

The sharing server 30 provides a sharing service and may be realized by an information processing apparatus, such as a server apparatus or a personal computer. The sharing service serves an intermediary when various resources, such as cars, vacant rooms, cloths, manpower, ability, and funds, are shared by a plurality of persons or when such resources are lent and borrowed among individuals. In this embodiment, a case where the sharing server 30 provides a sharing service of cloud sourcing in which jobs are outsourced to unspecified number of persons will be described. Hereinafter, a provider of a case is referred to as a "client" and an applicant to the case is referred to as a "worker".

The sharing server 30 provides the sharing service as a web application or a smartphone application on the user terminals 35. Furthermore, the sharing server 30 performs a process of performing matching between an offering case and an applicant in cooperation with an evaluation processing apparatus 10 described below.

Each of the user terminals 35 is an information processing terminal used by a user who uses the sharing service including a client and a worker and may be realized by a personal computer, a tablet terminal, a smartphone, or the like. When activating an application of a desired sharing service, the user terminal 35 accesses the sharing server 30 which provides the sharing service.

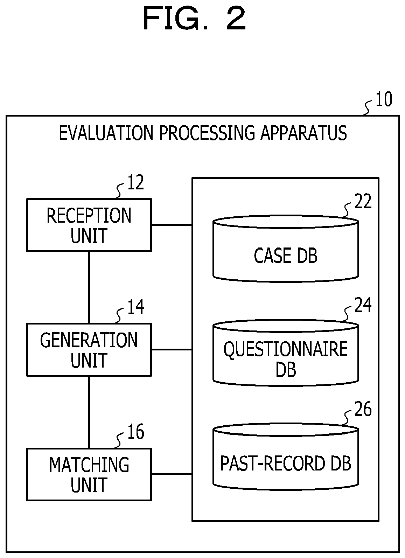

The evaluation processing apparatus 10 functions as a common base of a plurality of sharing services. The evaluation processing apparatus 10 functionally includes a reception unit 12, a generation unit 14, and a matching unit 16 as illustrated in FIG. 2. Furthermore, the evaluation processing apparatus 10 stores a case database (DB) 22, a questionnaire DB 24, and a past-record DB 26 in a certain storage region. Note that the generation unit 14 is an example of a transmission unit of the disclosed technique.

The reception unit 12 receives information on an offering case (hereinafter referred to as "case information") from the user terminal 35 used by the client. The case information includes identification information of the client, conditions and content of the case, and preferred items to workers. The reception unit 12 assigns identification information of the case to the received case information and stores the case information in the case DB 22.

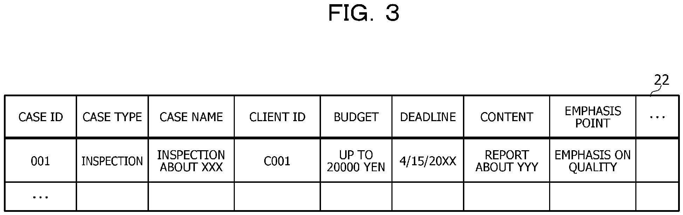

FIG. 3 is a diagram illustrating an example of the case DB 22. In the example of FIG. 3, the case DB 22 stores information on "Case ID", "Case Type", "Case Name", "Client ID", "Budget", "Deadline", "Content", "Emphasis Point", and the like.

"Case ID" is an example of identification information of a case. "Case Type" is information indicating a type of the case. "Client ID" is an example of identification information of the client. "Budget", "Deadline", and "Content" are examples of conditions of the case. "Emphasis Point" indicates a point which is important for a client as a preferred item to workers to be matching targets. For example, "Emphasis on Quality" which indicates that workers who achieve excellent quality in performance of the case are preferential, "Emphasis on Deadline" which indicates that workers who may perform the case by a preferred deadline are preferential, or "Emphasis on Budget" which indicates that workers who may perform the case in a low budget are preferential may be set.

The reception unit 12 discloses the case information stored in the case DB 22 on the sharing service. By this, various users may view the case information. Furthermore, the reception unit 12 receives requests for conditions of the disclosed case from the workers in a questionnaire form. Note that a questionnaire is an example of evaluation on matching conditions of the disclosed technique.

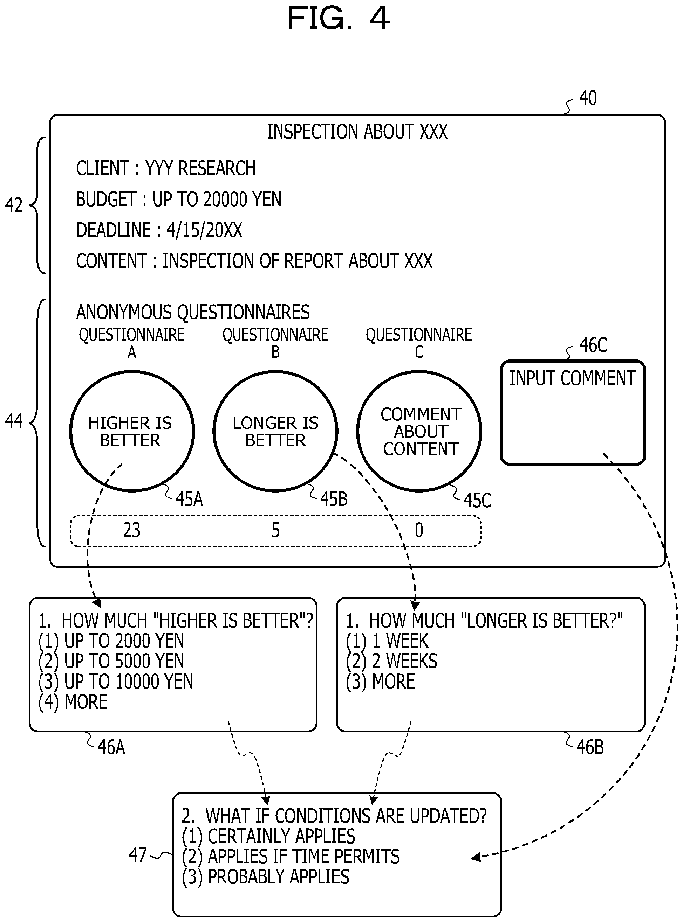

For example, the reception unit 12 displays a reception screen 40 as illustrated in FIG. 4 in the user terminal 35. In the example of FIG. 4, a reception screen 40 includes a case region 42 in which the case information is displayed and a questionnaire region 44 for receiving answers of questionnaires from workers. The case information stored in the case DB 22 is displayed in the case region 42. Note that, in the example of FIG. 4, a client name corresponding to a client ID stored in the case DB 22 is displayed. Association between the client ID and the client name is obtained with reference to a user master or the like which is independently managed in the sharing service.

Furthermore, an example in which three questions (questionnaires A, B, and C) are displayed in the questionnaire region 44 is illustrated in FIG. 4. The questionnaire A includes a question associated with the budget, the questionnaire B includes a question associated with the deadline, and the questionnaire C includes a question for accepting an input of an arbitrary comment. Furthermore, the questionnaire region 44 includes answer buttons 45A, 45B, and 45C of the respective questions. When the answer button 45A of the questionnaire A is selected, the reception unit 12 displays an option screen 46A including options of an answer to the questionnaire A by pop-up in a state in which a selection of one of the options is available as illustrated in FIG. 4. The option screen 46A includes options of an amount of money for requesting a higher budget. Similarly, when the answer button 45B of the questionnaire B is selected, the reception unit 12 displays an option screen 46B including options of an answer to the questionnaire B. The option screen 46B includes options of a period of time for requesting postponement of a deadline.

Furthermore, when the answer button 45C of the questionnaire C is selected, the reception unit 12 displays a text box 46C for accepting a comment. Note that the text box 46C displayed in an inactive state in advance may be changed into a state in which an input of text data is available in response to a selection of the answer button 45C. Furthermore, the text box 46C which may accept text data may be constantly displayed while the answer button 45C is omitted.

Furthermore, in a case where an answer to one of the questions is input, the reception unit 12 further receives a questionnaire about degrees of intentions of application for the case of the workers who answer the questionnaire if conditions of the case are eased. The case where an answer to one of the questions is input corresponds to a case where one of the options is selected in the option screens 46A and 46B or a case where a comment is input to the text box 46C. For example, the reception unit 12 displays an option screen 47 including options indicating degrees of an intention of application by pop-up or the like in a state in which one of the options is acceptable as illustrated in FIG. 4. In this embodiment, the options of the questionnaire of an intension of application include an option indicating that, if the conditions of the case are eased depending on an answer to the questionnaire, immediate matching with the case is permitted ("(1) certainly applies" in the example of FIG. 4).

Furthermore, when receiving an answer to one of the questions included in the questionnaire region 44 and an answer of an intention of application, the reception unit 12 stores the received answers in the questionnaire DB 24.

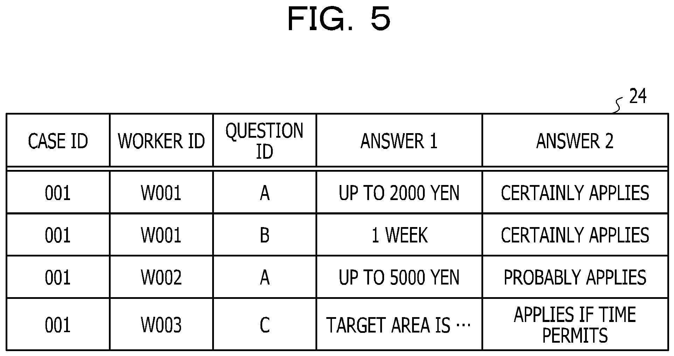

FIG. 5 is a diagram illustrating an example of the questionnaire DB 24. In the example of FIG. 5, the questionnaire DB 24 stores "Case ID" of a target case, "Worker ID" indicating an identification information of a worker who answers a questionnaire, and "Question ID" indicating identification information of a question corresponding to a received answer in the target case. Furthermore, the questionnaire DB 24 stores a selected one of the options in the questions or an input comment as "Answer 1" and a degree of an intention of application as "Answer 2".

The reception unit 12 counts the numbers of records stored in the questionnaire DB 24 for individual questions of each case and displays the numbers of records as the numbers of answers 48 to the individual questions in the questionnaire region 44 as illustrated in FIG. 4. The display of the number of answers 48 assists the client in estimation of possibility of application of workers and assists workers who consider application in recognition of intentions of other workers.

In a case where evaluation of the workers on the conditions of the case being offered is lower than a criterion, the generation unit 14 generates a suggestion for displaying ease of the conditions of the case for the client which offers the case. The questionnaires in this embodiment are used to accept a request of ease of the conditions from the workers, and options of the questionnaires are lower than the conditions defined by the client. Accordingly, the acceptance of answers to the questionnaires from the workers corresponds to the "case where evaluation of the worker is lower than a criterion".

Specifically, the generation unit 14 counts the numbers of answers to the questionnaires stored in the questionnaire DB 24and generates a suggestion in accordance with a result of the counting. For example, the generation unit 14 individually counts the numbers of answers of the options of the questions, counts application intentions of the workers who selected the options for individual degrees, calculates an average of evaluations (which will be described in detail hereinafter) of the workers for individual options, and generates screen information of a suggestion screen which displays results of the counting and a result of the calculation in graphs. Furthermore, the generation unit 14 generates a message indicating content of the suggestion using a predetermined template, the counting results, and the calculation result and incorporates the message in the suggestion.

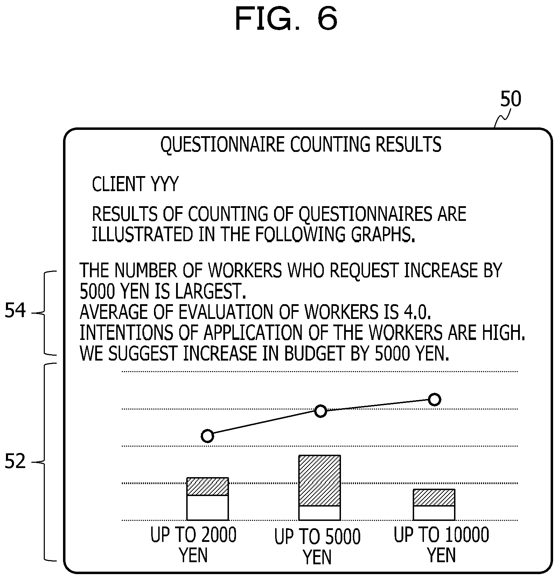

FIG. 6 is a diagram illustrating an example of a suggestion screen 50 based on results of the questionnaires. In the example of FIG. 6, the suggestion screen 50 based on a result of a questionnaire includes a graph region 52 and a message region 54. An axis of abscissae in the graph region 52 denotes the options of the questionnaire, and a case where a bar graph indicating the numbers of answers of the options and a line graph indicating averages of the evaluations of the workers who selected the individual options are displayed is illustrated as an example. Furthermore, the bar graph indicating the numbers of answers of the individual options is displayed by colors corresponding to degrees of intentions of application of the workers who selected the individual options. Note that, a case where the number of answers to the question associated with the budget in the questionnaires is counted and evaluation in quality is used as evaluation of workers is illustrated as an example in FIG. 6.

In the message region 54, a message generated using a predetermined template, counting results and a calculation result is displayed. For example, a sentence "the number of workers who request increase in a budget by <5000 yen> is largest" (content in "<>" indicates content of one of the options), may be generated as illustrated in FIG. 6 using one of the options corresponding to the largest number of answers. Furthermore, a sentence "an average of evaluations of the workers is <4.0>" (content in "<>" indicates the calculated average of the evaluations), for example, may be generated using the average of the evaluations of the workers who selected the option. Furthermore, in a case where, in the workers who selected the option, a rate of workers who have intentions of application in a highest degree ("certainly applies" in this case) is equal to or larger than a predetermined value, a sentence "degrees of intentions of application of the worker are high" may be generated. The generation unit 14 may combine the sentences so as to generate a message illustrated in FIG. 6.

Furthermore, the message region 54 may include content of a suggestion obtained in accordance with a predetermined rule using a combination of an option corresponding to the largest number of answers, the average of the evaluations of the workers, and the intentions of application ("a budget increased by 5000 yen is recommended" in the example of FIG. 6). As the rule, a rule in which an option which corresponds to an evaluation of a worker of an emphasis point of the client which is equal to or larger than a predetermined value and which is answered most frequently by the workers of high-degree intentions of application is recommended, for example, may be defined in advance. Since the suggestion is generated based on the questionnaire, as the number of requests of the ease of the conditions of the workers becomes larger, a suggestion corresponding to a high degree of ease of the conditions is generated.

Furthermore, the generation unit 14 generates a suggestion based on a market trend. Specifically, the generation unit 14 searches the case DB 22 for other cases of a type which is the same as that of the target case and generates a suggestion using results of questionnaires about the other cases as information indicating a market trend. For example, the generation unit 14 extracts the results of the questionnaires corresponding to case IDs of the other cases obtained from the case DB 22 from the questionnaire DB 24 and counts the number of answers. Then the generation unit 14 may generate a suggestion "A budget increased by 5000 yen is most popular in workers having high degree intentions of application, and accordingly, the budget increases by 5000 yen is recommended", for example.

Furthermore, the generation unit 14 obtains past records of budgets and deadlines of the other cases of the same case type from a past-record DB 26 and generates a suggestion based on the obtained information.

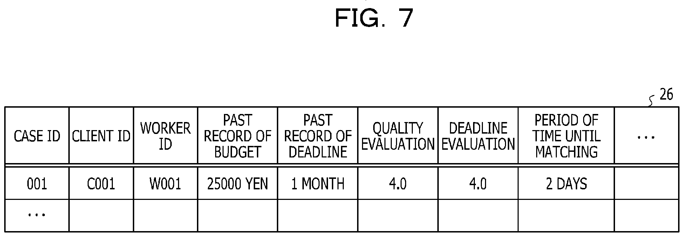

Here, FIG. 7 is a diagram illustrating an example of the past-record DB 26. In the example of FIG. 7, information on "case ID", "client ID", "worker ID", "past record of budget", "past record of deadline", "quality evaluation", "deadline evaluation", "period of time until matching", and the like is stored in the past-record DB 26. "Client ID" indicates an ID of the client which offers the case, and "worker ID" is an ID of a worker who is an applicant of the case and who has matched the case. "Past record of budget" and "past record of deadline" are conditions of cases for matching. "Quality evaluation" is indicated by an evaluation value (a score out of 5 points, for example) associated with quality of a worker relative to the case and is assigned by the client after the case is completed, for example. "Deadline evaluation" is indicated by an evaluation value (a score out of 5 points, for example) indicating a difference between a deadline included in the conditions of the case at the time of matching and a deadline when the case is actually completed. "Period of time until matching" is a period of time from when the case offered by the client is disclosed on the sharing service to when matching with a worker is achieved.

The generation unit 14 calculates an average of "past records of budget" of other cases of a type which is the same as that of the target case and an average of "past records of deadline" of the other cases. Then the generation unit 14 generates a suggestion "according to similar cases, matching is achieved in an average budget of 25000 yen and an average deadline of one month, and accordingly, a budget increased by 5000 yen is recommended.", for example. Furthermore, the generation unit 14 may use only past records of the cases corresponding to "periods of time until matching" which are equal to or smaller than a predetermined period of time among the other cases of a type which is the same as that of the target case. In this case, a sentence "matching within one day is estimated", for example, may be added to the suggestion. Furthermore, the generation unit 14 may store information indicating whether the matching has been achieved for each case and generate a suggestion "matching may not be achieved in a budget of 20000 yen, and therefore, increase in the budget by 5000 yen is recommended".

Furthermore, the generation unit 14 generates a suggestion based on results of the questionnaire of workers who satisfy the emphasis point of the client to the workers. Specifically, the generation unit 14 calculates an average of quality evaluations and an average of deadline evaluations for each worker who answers the questionnaire of the target case in accordance with "quality evaluation" and "deadline evaluation" stored in the past-record DB 26. Furthermore, the generation unit 14 obtains an emphasis point of the client to the workers from "emphasis point" included in the case DB 22. The generation unit 14 extracts a worker desired by the client based on the calculated average of the quality evaluations, the calculated average of the deadline evaluations, and the emphasis point. For example, in a case where the client demands "quality emphasis", a worker who has an advantage of quality evaluations equal to or larger than a predetermined value (4 or more out of 5 points, for example) is extracted.

The generation unit 14 generates a suggestion using an option which is answered by the extracted worker to the target case with reference to the questionnaire DB 24. When a plurality of workers are extracted, a result of a questionnaire of one of the workers who has the highest degree of an intention of application may be used. Alternatively, a suggestion may be generated using content obtained by counting results of the questionnaire of the plurality of workers. For example, the generation unit 14 may generate a suggestion "if the budget is increased by 5000 yen, application of a worker who emphasizes quality is expected".

The generation unit 14 transmits screen information of the suggestion screen 50 or a suggestion generated as a message to the user terminal 35 used by the client by using of an e-mail or a message function of an application. Furthermore, the suggestion screen 50 or the massage may be displayed when the client activates an application using the user terminal 35 and selects a menu.

The matching unit 16 receives a notification indicating that the conditions of the case are eased from the user terminal 35 used by the client which has transmitted the suggestion using the generation unit 14. Content of the notification indicates that the suggestion is to be accepted or conditions reset by the client based on the suggestion, for example.

When receiving the notification indicating that the conditions of the case are eased, the matching unit 16 selects a worker of a matching target from among the workers who answer the questionnaire of the target case. Specifically, the matching unit 16 extracts workers corresponding to an answer of a questionnaire which satisfies the eased conditions with reference to the questionnaire DB 24. Then the matching unit 16 determines priority levels, for checking whether the matching is achieved, of the extracted workers in descending order of degrees of intentions of application of the workers and descending order of the evaluations. The matching unit 16 selects a worker of a matching target in descending order of the priority levels. In this case, when a degree of the intention of application of the selected worker corresponds to "certainly applies", the matching unit 16 transmits achievement of matching to the sharing service without checking whether the matching has been achieved. By this, a matching achievement process is executed by the sharing service.

The matching unit 16 transmits the eased conditions to the selected worker and checks whether the matching has been achieved, when a degree of an intention of application of the selected worker is not "certainly applies". When receiving the notification indicating application from the worker in which the determination as to whether matching has been achieved is performed, the matching unit 16 notifies the sharing service of achievement of matching. Furthermore, when the matching is achieved, the matching unit 16 stores content of the achievement in the past-record DB 26.

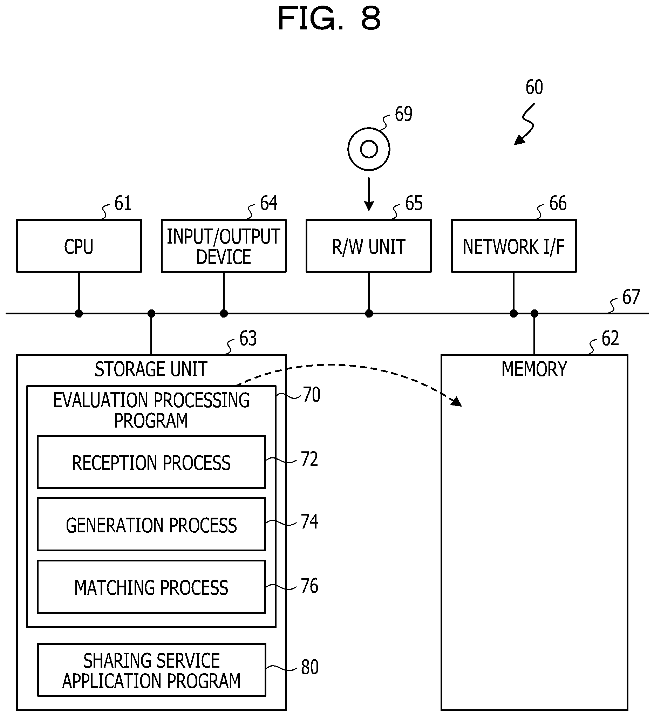

The sharing server 30 may be realized by a computer 60 illustrated in FIG. 8, for example. The computer 60 includes a central processing unit (CPU) 61, a memory 62 serving as a temporary storage region, and a nonvolatile storage unit 63. The computer 60 further includes an input/output device 64, a read/write (R/W) unit 65 which controls reading of data from and writing of data to a storage medium 69, and a communication interface (I/F) 66 connected to a network, such as the Internet. The CPU 61, the memory 62, the storage unit 63, the input/output device 64, the R/W unit 65, and the communication I/F 66 are connected to one another through a bus 67.

The storage unit 63 is realized by a hard disk drive (HDD), a solid state drive (SSD), or a flash memory. The storage unit 63 serving as a storage medium stores an evaluation processing program 70 functioning as the evaluation processing apparatus 10 and a sharing service application program 80 which causes the computer 60 to function as the sharing server 30 in combination with the evaluation processing program 70. The evaluation processing program 70 functions as a common base of the sharing service. The sharing service application program 80 provides a function corresponding to an application of the sharing service, such as management of users and search of a case. The evaluation processing program 70 includes a reception process 72, a generation process 74, and a matching process 76.

The CPU 61 reads the evaluation processing program 70 from the storage unit 63, develops the read evaluation processing program 70 in the memory 62, and successively executes the processes included in the evaluation processing program 70. The CPU 61 operates as the reception unit 12 of FIG. 2 by executing the reception process 72. Furthermore, the CPU 61 operates as the generation unit 14 of FIG. 2 by executing the generation process 74. Furthermore, the CPU 61 operates as the matching unit 16 of FIG. 2 by executing the matching process 76. Furthermore, the CPU 61 reads the sharing service application program 80 from the storage unit 63, develops the read sharing service application program 80 in the memory 62, and successively executes processes included in the sharing service application program 80. In this way, the computer 60 executing the evaluation processing program 70 and the sharing service application program 80 functions as the sharing server 30. Note that a portion functioning when the computer 60 executes the evaluation processing program 70 corresponds to the evaluation processing apparatus 10.

Note that the function realized by the evaluation processing program 70 may be realized by a semiconductor integrated circuit, or more specifically, by an application specific integrated circuit (ASIC) or the like.

Next, operation of the evaluation processing apparatus 10 according to this embodiment will be described.

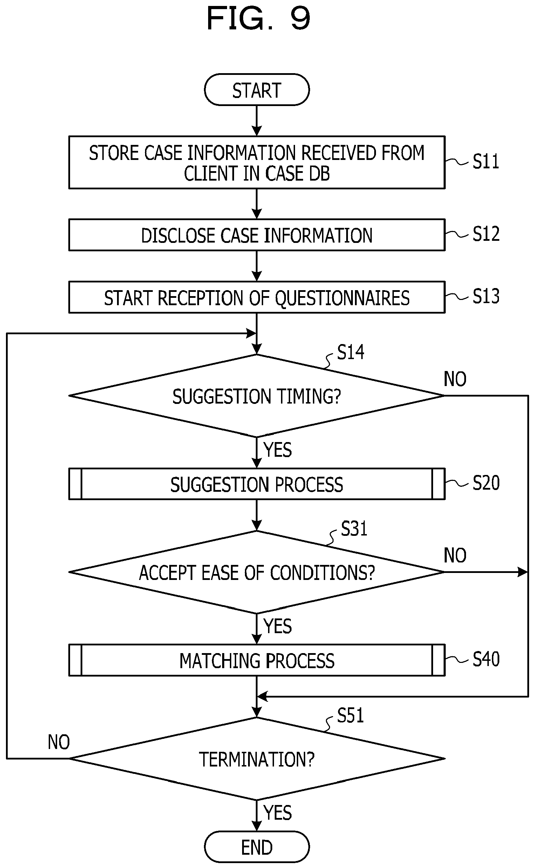

When receiving case information from the user terminal 35 used by the client, the evaluation processing apparatus 10 executes an evaluation process illustrated in FIG. 9. Note that the evaluation process is an example of an evaluation processing method of the disclosed technique.

In step S11, the reception unit 12 assigns a case ID to the received case information and stores the case information in the case DB 22. Subsequently, in step S12, the case information stored in the case DB 22 is disclosed on the sharing service along with questions of questionnaires in a format of the reception screen 40 illustrated in FIG. 4, for example.

In step S13, the reception unit 12 starts reception of answers to the questionnaires through the questionnaire region 44 in the reception screen 40. When receiving an answer to one of the questions and an answer of an intention of application, the reception unit 12 stores the received answers in the questionnaire DB 24. The reception of answers to the questionnaires is continuously executed until the evaluation process is terminated or until a predetermined questionnaire reception period is terminated.

In step S14, the generation unit 14 determines whether a timing when ease of the conditions of the case is suggested for the client has been reached. For example, the generation unit 14 may determine that the suggestion timing has been reached when a predetermined period of time has elapsed after a preceding suggestion or when the number of answers of the questionnaires exceeds a predetermined number. When the suggestion timing has been reached, the process proceeds to step S20, and otherwise, the process proceeds to step S51.

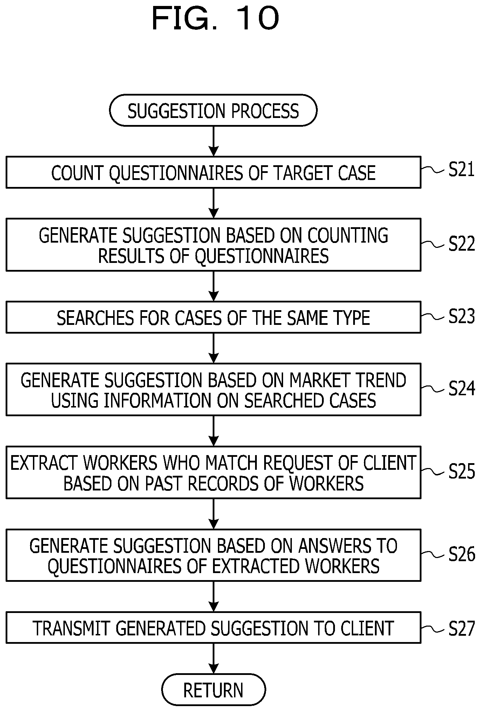

In step S20, a suggestion process illustrated in FIG. 10 is executed.

In step S21, the generation unit 14 counts the numbers of answers for individual options of the questions of the questionnaires, counts intentions of application of the workers who selected the individual options for individual degrees, and calculates averages of the evaluations of the workers for individual options. Thereafter, in step S22, the generation unit 14 generates screen information on the suggestion screen 50 including graphs indicating results of the counting and a result of the calculation and a message indicating content of a suggestion generated using a predetermined template, the results of the counting, and the result of the calculation.

Subsequently, in step S23, the generation unit 14 searches the case DB 22 for other cases of a type which is the same as that of the target case. In step S24, the generation unit 14 generates a suggestion using results and past records of the questionnaires of the obtained other cases as information indicating a market trend.

In step S25, the generation unit 14 calculates an average of quality evaluations and an average of deadline evaluations for each worker who answers the questionnaires of the case in accordance with "quality evaluation" and "deadline evaluation" stored in the past-record DB 26. The generation unit 14 obtains an emphasis point of the client to the workers from "emphasis point" included in the case DB 22. The generation unit 14 extracts a worker corresponding to a request by the client based on the calculated average of the quality evaluations, the calculated average of the deadline evaluations, and the emphasis point. In step S26, the generation unit 14 generates a suggestion using an option which is answered by the extracted worker to the target case with reference to the questionnaire DB 24.

In step S27, the generation unit 14 transmits the screen information of the suggestion screen 50 or the suggestion generated as a message to the user terminal 35 used by the client which offers the target case. Note that the suggestion transmitted in this step may be all the suggestions generated in step S22, step S24, and step S26 or one of the suggestions. The suggestion process is thus terminated and the process returns to the evaluation process (FIG. 9).

Subsequently, in step S31 in the evaluation process, it is determined whether the matching unit 16 has received a notification indicating that the conditions of the case are eased from the user terminal 35 used by the client which has transmitted the suggestion using the generation unit 14. When the determination is affirmative, the process proceeds to step S40, and otherwise, the process proceeds to step S51.

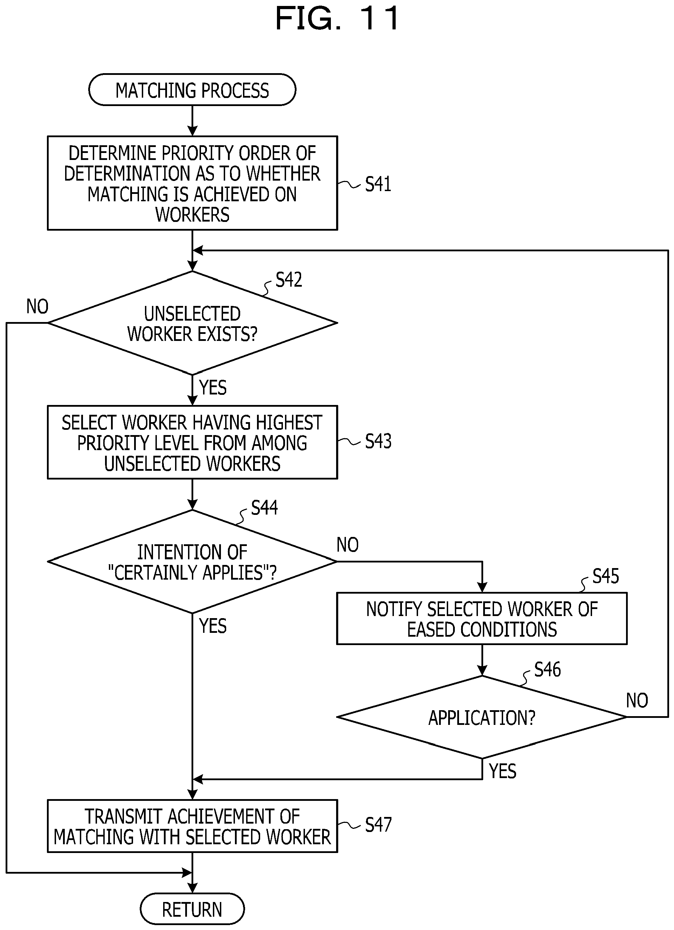

In step S40, a matching process in FIG. 11 is executed.

In step S41, the matching unit 16 extracts workers corresponding to answers of the questionnaires which satisfy the eased conditions with reference to the questionnaire DB 24. The matching unit 16 may further extract workers having evaluations (quality evaluations or deadline evaluations) corresponding to the emphasis point of the client which are equal to or larger than a predetermined value in the extracted workers. Then the matching unit 16 determines priority order, for checking whether the matching is achieved, of the extracted workers in a descending order of degrees of intentions of application of the workers and a descending order of the evaluations.

In step S42, the matching unit 16 determines whether a worker who is not selected as a target of a process described below exists in the workers in which the priority order is determined. When the determination is affirmative, the process proceeds to step S43.

In step S43, the matching unit 16 selects a worker who has the highest priority level in the workers who are not selected.

In step S44, the matching unit 16 determines whether a degree of an intention of application of the selected worker corresponds to "certainly applies" with reference to the questionnaire DB 24. When the determination is affirmative, the process proceeds to step S47, and otherwise, the process proceeds to step S45.

In step S45, the matching unit 16 notifies the selected worker of the eased conditions and determines whether matching is achieved. In step S46, the matching unit 16 determines whether the worker on which the determination as to whether matching is achieved has been made has applied. When the determination is affirmative, the process proceeds to step S47, and otherwise, the process returns to step S42. Note that the matching unit 16 may determine that an application is not made when an application is not made for a set application period or when the worker transmits a notification indicating that application is not to be made.

In step S47, the matching unit 16 notifies the sharing service of the achievement of the matching. Furthermore, when the matching is achieved, the matching unit 16 stores content of the achievement in the past-record DB 26. The matching process is thus terminated and the process returns to the evaluation process (FIG. 9).

When the determination is negative in step S42, the matching is not achieved, the matching process is terminated, and the process returns to the evaluation process (FIG. 9).

Subsequently, in step S51 in the evaluation process, the matching unit 16 determines whether the evaluation process is to be terminated. For example, the matching unit 16 determines that the evaluation process is to be terminated when an offering period of the case is terminated or when the matching is achieved. When the determination is negative, the process returns to step S14, and otherwise, the evaluation process is terminated.

As described above, according to the evaluation processing apparatus of this embodiment, questionnaires associated with conditions of a case offered by the client is received from the workers. Then ease of the conditions of the case is suggested to the client based on results of the questionnaires, s market trend, past records of the workers, and the like. If the ease of conditions is accepted by the client, possibility of application of the workers is increased, and therefore, matching in the sharing service may be enhanced.

Furthermore, intentions of application of workers who answer the questionnaires at a time when the conditions are eased are checked, and matching is achieved without performing a determination as to whether matching is to be achieved on the workers who express intensions indicating that application is immediately made when the conditions are eased. By this, occurrence of a case where the questionnaires are answered as a prank by workers who do not have intentions of application may be suppressed while more reliable achievement of matching may be enhanced.

Note that, although the case of the cloud sourcing is described as an example in the foregoing embodiment, the disclosed technique may be applied to a sharing service of object or spaces, such as car sharing or vacation rentals similarly to the embodiment. In this case, a person who offers objects and spaces corresponds to a provider and a user who uses the object and the spaces corresponds to an applicant. Furthermore, the questionnaires in this case correspond to expressions indicating a request of price cheaper than a price set by the provider (for example, "bit cheaper is better").

Furthermore, in the foregoing embodiment, operation states of workers who are separately managed by the sharing service are checked and if the workers who answer the questionnaires perform operations of another case, the workers may be excepted from a matching target.

Furthermore, if a worker does not make an application although the worker expresses an intention of application of a predetermined degree or more, penalty, such as degradation of an evaluation, revoke of application qualification for limited time, penalty charges, or revoke of user qualification, may be given.

Furthermore, although the case where the matching of a worker who expresses an intention of application of immediate application if the conditions are eased is achieved without determining whether the matching is to be achieved is described, the present disclosure is not limited to this. A determination as to whether the matching is to be achieved may be made irrespective of a degree of an intention of application of a worker, or matching may be achieved without determining whether matching is to be achieved.

Furthermore, although the case where a determination as to whether the matching has been achieved is made for each person in accordance with priority levels based on evaluations and intentions of application is described in the foregoing embodiment, the present disclosure is not limited to this. For example, information indicating that the conditions are eased may be transmitted to a plurality of workers having evaluations or intentions of application which satisfy predetermined conditions, and matching may be performed on a first-come-first-serve basis of application or matching with a worker selected by the client from among applicant workers may be made.

Furthermore, although a case where one of options is selected and the option is answered in each question of a questionnaire is described in the foregoing embodiment, the present disclosure is not limited to this. In the case of the reception screen 40 in FIG. 4, for example, if the answer button 45A in the questionnaire A is selected, a request for setting a higher budget without specifying a concrete amount of increase in the budget may be set as an answer. Similarly, if the answer button 45B in the questionnaire B is selected, a request for setting a longer deadline without specifying a concrete amount of increase of a deadline may be set as an answer. In this case, a suggestion "many workers request increase in a budget, and therefore, the budget increases by 5000 yen is recommended", for example, may be generated depending on the numbers of answers in individual questions. Note that a concrete content of a suggested budget and a suggested deadline may be determined in accordance with a market trend.

Although the case where a suggestion is generated using evaluations of the workers is described in the foregoing embodiment, a suggestion may be generated using evaluations of the client. For example, evaluations of the client by the workers and information indicating whether the matching has been achieved are stored as past records of each case. Then, a suggestion "Past records of achievement of matching of YYY (a client name) is 95%, and an evaluation by workers is 4.8. According to similar cases, application is expected even if a budget is increased by 10%" may be generated.

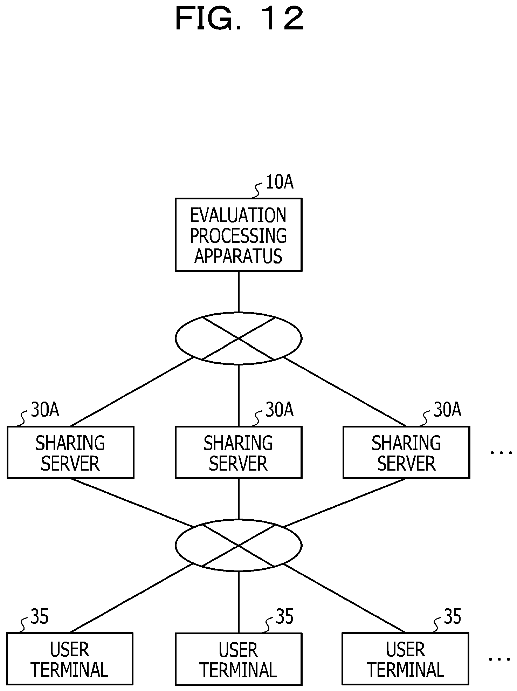

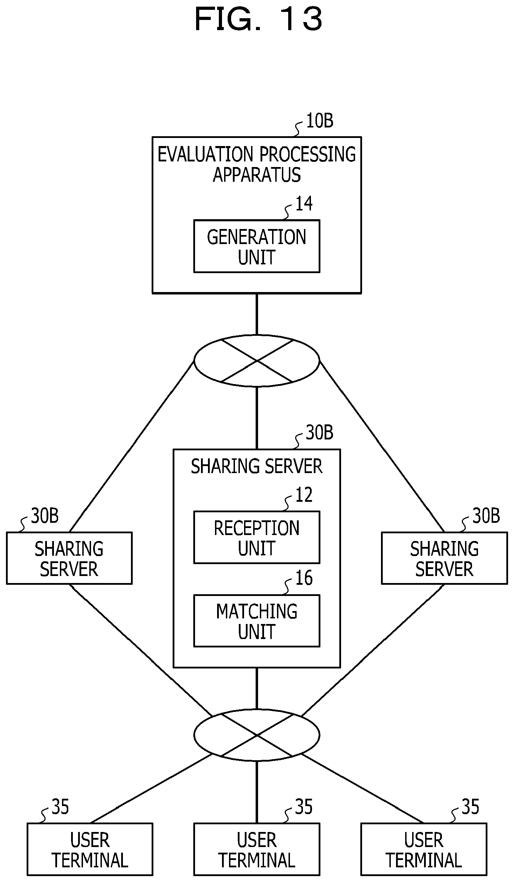

Furthermore, although a case where the evaluation processing apparatus 10 is mounted on the sharing server 30 is described in the foregoing embodiment, the present disclosure is not limited to this. For example, an evaluation processing apparatus 10A is provided separately from sharing servers 30A as illustrated in FIG. 12, and the evaluation processing apparatus 10A and the sharing servers 30A may be connected through a network, such as the Internet. Furthermore, as illustrated in FIG. 13, the generation unit 14 may be included in the evaluation processing apparatus 10B, and the reception unit 12 and the matching unit 16 may be included in the sharing server 30B.

Furthermore, although the mode in which the evaluation processing program 70 is stored (installed) in the storage unit 63 in advance has been described, the present disclosure is not limited to this. The program may be provided in a form in which the program is stored in a storage medium, such as a CD-ROM, a DVD-ROM, or a USB memory.

### [Reference Signs List]

10 EVALUATION PROCESSING APPARATUS
12 RECEPTION UNIT
14 GENERATION UNIT
16 MATCHING UNIT
22 CASE DATABASE (DB)
24 QUESTIONNAIRE DB
26 PAST-RECORD DB
30 SHARING SERVER
35 USER TERMINAL
40 RECEPTION SCREEN
42 CASE REGION
44 QUESTIONNAIRE REGION
45A, 45B, AND 45C ANSWER BUTTON
46A, 46B, AND 47 OPTION SCREEN
46C TEXT BOX
48 THE NUMBER OF ANSWERS
50 SUGGESTION SCREEN
52 GRAPH REGION
54 MESSAGE REGION
60 COMPUTER
61 CPU
62 MEMORY
63 STORAGE UNIT
69 STORAGE MEDIUM
70 EVALUATION PROCESSING PROGRAM

## Claims

1. A method of evaluation processing executed by a computer, the method comprising:
receiving first information indicating a first condition from a first terminal device;
setting the first condition indicated by the received first information to be a reference available state in which reference by a second terminal device is available;
receiving second information indicating an evaluation relative to the first condition from the second terminal device; and
transmitting, to the first terminal device, third information indicating a change of the first condition based on the received second information.

2. The method according to claim 1, wherein
in the transmitting of the third information, the third information is transmitted when the evaluation indicated by the received second information is different from a criterion.

3. The method according to claim 2, wherein
a degree of the change of the first condition indicated by the third information is increased as a difference between the evaluation and the criterion is increased.

4. The method according to claim 1, wherein the second information includes a first value indicating a degree of the change of the first condition, and the method further comprises:
performing a matching achievement processing between the first terminal device and the second terminal device when the degree of change of the first condition based on the third information is a second value and the second value is not less than the first value.

5. The method according to claim 1, wherein the first condition includes a target condition associated with a matching target, and the second condition satisfies the target condition associated with the matching target, and the method further comprises:
transmitting, to the second terminal device, a matching confirming message when the change of the first condition based on the third information is performed by the first terminal device.

6. The method according to claim 1, wherein
the third information is generated based on at least one of past records of the second terminal device and a degree of an intention expression relative to matching indicated by the second terminal device.

7. An information processing apparatus comprising:
a memory; and
a processor coupled to the memory and configured to:
receive first information indicating a first condition from a first terminal device,
set the first condition indicated by the received first information to be a reference available state in which reference by a second terminal device is available,
receive second information indicating an evaluation relative to the first condition from the second terminal device, and
transmit, to the first terminal device, third information indicating a change of the first condition based on the received second information.

8. The information processing apparatus according to claim 7, wherein the processor is configured to:
transmit the third information when the evaluation indicated by the received second information is different from a criterion.

9. The information processing apparatus according to claim 8, wherein
a degree of the change of the first condition indicated by the third information is increased as a difference between the evaluation and the criterion is increased.

10. The information processing apparatus according to claim 7, wherein the second information includes a first value indicating a degree of the change of the first condition, and the processor is configured to:
perform a matching achievement processing between the first terminal device and the second terminal device when the degree of change of the first condition based on the third information is a second value and the second value is not less than the first value.

11. The information processing apparatus according to claim 7, wherein the first condition includes a target condition associated with a matching target, and the second condition satisfies the target condition associated with the matching target, and the processor is configured to:
transmit, to the second terminal device, a matching confirming message when the change of the first condition based on the third information is performed by the first terminal device.

12. The information processing apparatus according to claim 7, wherein
the third information is generated based on at least one of past records of the second terminal device and a degree of an intention expression relative to matching indicated by the second terminal device.

13. A program that causes an information processing apparatus to execute a process, the process comprising:
receiving first information indicating a first condition from a first terminal device;
setting the first condition indicated by the received first information to be a reference available state in which reference by a second terminal device is available;
receiving second information indicating an evaluation relative to the first condition from the second terminal device; and
transmitting, to the first terminal device, third information indicating a change of the first condition based on the received second information.

14. The program according to claim 13, wherein
in the transmitting of the third information, the third information is transmitted when the evaluation indicated by the received second information is different from a criterion.

15. The program according to claim 14, wherein
a degree of the change of the first condition indicated by the third information is increased as a difference between the evaluation and the criterion is increased.
